(19) Europäisches Patentamt
European Patent Office
Office européen des brevets

(11) **EP 4 765 432 A1**

(12) **EUROPEAN PATENT APPLICATION**
published in accordance with Art. 153(4) EPC

(43) Date of publication:
**24.06.2026 Bulletin 2026/26**

(21) Application number: **24894605.5**

(22) Date of filing: **20.11.2024**

(51) International Patent Classification (IPC):
**H01M 50/431** (2021.01)   **H01M 50/451** (2021.01)
**H01M 50/446** (2021.01)   **H01M 50/443** (2021.01)
**H01M 50/491** (2021.01)   **H01M 50/489** (2021.01)
**H01M 10/052** (2010.01)

(52) Cooperative Patent Classification (CPC):
**H01M 10/052; H01M 50/431; H01M 50/443;**
**H01M 50/446; H01M 50/451; H01M 50/489;**
**H01M 50/491;** Y02E 60/10

(86) International application number:
**PCT/KR2024/018394**

(87) International publication number:
**WO 2025/110713 (30.05.2025 Gazette 2025/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.11.2023   KR 20230166120
18.11.2024   KR 20240164623**

(71) Applicant: **LG Energy Solution, Ltd.
Seoul 07335 (KR)**

(72) Inventors:
• **KIM, Ji Hyeon
Daejeon 34122 (KR)**
• **SUNG, In Hyouk
Daejeon 34122 (KR)**
• **KIM, Ji Yeon
Daejeon 34122 (KR)**

(74) Representative: **Plasseraud IP
104 Rue de Richelieu
CS92104
75080 Paris Cedex 02 (FR)**

(54) **SEPARATOR, AND LITHIUM SECONDARY BATTERY COMPRISING SAME**

(57)    The present invention relates to a separator including a substrate layer; and a porous coating layer positioned on one side or both sides of the substrate layer, and containing a first inorganic particle, a second inorganic particle, and an acrylic-based binder, wherein a ratio of an average particle diameter ($D_{50}$) of the second inorganic particle to an average particle diameter ($D_{50}$) of the first inorganic particle is 1.4 to 2.0, an amount of the first inorganic particle is greater than an amount of the second inorganic particle on the basis of a total weight of the porous coating layer, and the porous coating layer has a thickness of 1.2 $\mu$m to 2.0 $\mu$m.

**Description**

## TECHNICAL FIELD

### Cross-reference to Related Applications

This application claims priority from Korean Patent Application No. 10-2023-0166120, filed on November 24, 2023, and No. 10-2024-0164623, filed on November 18, 2024, the disclosures of which are incorporated herein.

### Technical Field

The present invention relates to a separator and a lithium secondary battery including the same, and particularly, a separator including a porous coating layer in which an inorganic material with a bimodal distribution is mixed in a particular ratio of average particle diameter ($D_{50}$) and a particular weight ratio, wherein the porous coating layer has a thickness of 1.2 $\mu$m to 2.0 $\mu$m, thereby improving wet shrinkage and dry shrinkage, and a lithium secondary battery including the same.

## BACKGROUND ART

Due to the increase in technological development and demand for mobile devices, demand for secondary batteries as a source of energy is rapidly increasing. Among such secondary batteries, a lithium secondary battery having high energy density and voltage, long cycle lifetime, and low self-discharge rate has been commercialized and widely used.

In general, the lithium secondary battery is prepared by using a negative electrode and a positive electrode, and a separator disposed therebetween and an electrolyte that is a medium for transferring lithium ions.

Among these, the separator is an inactive material not involved in an electrochemical reaction, but providing a movement path of lithium ions for operating a battery, and as a material separating physical contact between the positive electrode and the negative electrode, the separator is one of the essential materials that largely influence performance and stability of the battery.

Meanwhile, the lithium secondary battery heats up easily due to kinetic energy generated while charging and discharging are repeated, and the separator is vulnerable to the heat. In particular, in case of a separator using polyethylene (PE), a 'shut down' phenomenon, in which melting begins at about 130 °C and pores close, may occur, and at 150 °C or higher, the separator may completely melt and collapse without being able to prevent an internal short circuit. In order to overcome this problem, research on a separator with durability, reinforced by applying inorganic particles onto a surface of the separator, has recently continued.

However, the durability of the separators which have currently developed is not sufficient. For example, when a hot box evaluation at 130 °C was performed on a cylindrical cell applied with a conventional separator, and the cell was disassembled, there was a problem that a free-standing separator positioned on the cell core excessively shrank in the TD direction so as to expose a part of an electrode.

Meanwhile, since the separator is used in a state impregnated with an electrolyte solution in the lithium secondary battery, the dimensional change rate of the separator in a wet state, rather than in a dry state, is more meaningful.

Accordingly, it is required to develop a separator capable of securing high-temperature dimensional stability of the separator in a wet state under the condition of high-temperature electrolyte solution.

## DISCLOSURE OF THE INVENTION

### TECHNICAL PROBLEM

The present invention is to solve the above-mentioned problem by providing a separator capable of suppressing shrinkage even in a state impregnated in a high-temperature electrolyte solution, and a lithium secondary battery including the same.

### TECHNICAL SOLUTION

[1] The present invention provides a separator including a substrate layer and a porous coating layer positioned on one side or both sides of the substrate layer, and containing a first inorganic particle, a second inorganic particle, and an acrylic-based binder, wherein a ratio of an average particle diameter ($D_{50}$) of the second inorganic particle to an average particle diameter ($D_{50}$) of the first inorganic particle is 1.4 to 2.0, an amount of the first inorganic particle is greater than an amount of the second inorganic particle on the basis of a total weight of the porous coating layer, and the porous coating layer has a thickness of 1.2 $\mu$m to 2.0 $\mu$m.

[2] The present invention provides the separator of [1] above, wherein the first inorganic particle has an average particle diameter ($D_{50}$) of 0.32 $\mu$m to 0.5 $\mu$m.

[3] The present invention provides the separator of [1] or [2] above, wherein the second inorganic particle has an average particle diameter ($D_{50}$) of 0.45 $\mu$m to 0.70 $\mu$m.

[4] the present invention provides the separator of any one of [1] to [3] above, wherein the porous coating layer includes the first inorganic particle and the second inorganic particle in a weight ratio of 55:45 to 95:5.

[5] The present invention provides the separator of any one of [1] to [4] above, wherein each of the first inorganic particle and the second inorganic particle, independently, includes one or more selected from the group consisting of aluminum oxide ($Al_2O_3$), boehmite (AlOOH), silicon dioxide ($SiO_2$), magnesium oxide (MgO), titanium oxide ($TiO_2$), and zeolite.

[6] The present invention provides the separator of any one of [1] to [5] above, wherein the porous coating layer has a porosity of 60% or less.

[7] The present invention provides the separator of any one of [1] to [6] above, wherein the porous coating layer has a loading amount of 4.9 g/cm$^2$ to 7.0 g/cm$^2$.

[8] The present invention provides the separator of any one of [1] to [7] above, wherein the porous coating layer has a packing density of 1.4 g/cm$^3$ to 2.0 g/cm$^3$.

[9] The present invention provides the separator of any one of [1] to [8] above, wherein the porous coating layer is formed by applying a slurry composition having a solid content of 20 wt% to 50 wt% onto one side or both sides of the substrate layer.

[10] The present invention provides the separator of any one of [1] to [9] above, wherein the separator has a thickness of 11 $\mu$m to 14 $\mu$m.

[11] The present invention provides the separator of any one of [1] to [10] above, wherein, the separator has an MD shrinkage of 0.5% to 7.0%, and a TD shrinkage of 0.5% to 5.5% when the separator is impregnated in an electrolyte solution and then left at 130 °C for 30 minutes.

[12] The present invention provides the separator of any one of [1] to [11] above, wherein, the separator has an MD shrinkage of 1% to 50%, and a TD shrinkage of 2% to 40% when the separator is left at 150 °C for 30 minutes.

[13] The present invention provides a lithium secondary battery including the separator according to any one of [1] to [12] above.

## ADVANTAGEOUS EFFECTS

In a separator according to the present invention, by using a porous coating layer with a thickness of 1.2 $\mu$m to 2.0 $\mu$m which includes a first inorganic particle and a second inorganic particle satisfying a particular ratio of the average particle diameter ($D_{50}$) and a particular weight ratio, shrinkage of the separator on a high-temperature electrolyte solution is effectively suppressed. Accordingly, when the separator of the present invention is used, compared to a conventional separator, due to high dimensional stability, characteristics of high heat resistance may be achieved, so that a positive electrode and a negative electrode may be separated on the high-temperature electrolyte solution to thereby prevent an internal short circuit.

The effect according to the present invention is not limited to the above example, and more various effects are included in this specification.

## MODE FOR CARRYING OUT THE INVENTION

Hereinafter, the present invention will be described in detail.

It will be understood that terms or words used in the specification and claims shall not be interpreted as the meaning defined in commonly used dictionaries, and it will be further understood that the terms or words should be interpreted as having a meaning that is consistent with their meaning in the context of the relevant art and the technical idea of the invention, based on the principle that an inventor may properly define the meaning of the terms or words to best explain the invention.

The terminology used herein is for describing embodiments and is not intended to limit the present invention. In this specification, the singular forms are intended to include the plural forms as well, unless the context clearly indicates otherwise. The terms "comprises" and/or "comprising" used in this specification do not exclude the presence or addition of one or more other components.

In the present invention, the average particle diameter ($D_{50}$) refers to a particle size at a cumulative volume of 50% in a particle size distribution of powder to be measured such as inorganic particles. The average particle diameter ($D_{50}$) may be measured using a laser diffraction method. For example, after the powder to be measured is dispersed in a dispersion medium, the dispersion medium is introduced into a commercial laser diffraction particle size measurement instrument (e.g., Microtrac MT 3000) and irradiated with ultrasonic waves of about 28 kHz at an output of 60 W, and then a cumulative volume particle size distribution graph is obtained, and the particle size corresponding to 50% of the cumulative volume may then be calculated therefrom to measure the $D_{50}$.

In the present invention, the porosity may be calculated from a ratio of a packing density of a porous coating layer and a non-porous coating packing density. The non-porous coating packing density may be obtained, assuming the porosity of 0%, by applying a bulk density and a coating composition of raw materials used.

In the present invention, the loading amount (R, unit: $g/cm^2$) of the porous coating layer may be measured in a way that the weight of each of a coated separator and a base film, cut into a size of 5 cm x 5 cm, is measured 6 times and the average values W1 and W2 thereof are measured, and then the values are substituted into Equation 1 below.

$$[\text{Equation 1}]$$

$$R = (W1-W2) / 25$$

In the present invention, the packing density (D, unit: $g/cm^3$) of the porous coating layer may be calculated by substituting the loading amount (R) of the porous coating layer, the total thickness ($T_{total}$) of the separator, and the thickness ($T_c$) of the substrate layer of the separator into Equation 2 below.

$$[\text{Equation 2}]$$

$$D = R / \{(T_{total} - T_c) \times 0.0001\}$$

In the present invention, a MD direction (machine direction) refers to a length direction of the separator, and a TD direction (transverse direction) refers to a width direction of the separator.

In the present invention, the wet shrinkage is a value obtained by impregnating a separator that is cut into a size of 5 cm x 5 cm with an electrolyte solution in a pouch of 10 cm x 9 cm, then storing the impregnated separator in a convection oven at 130 °C for 30 minutes, and then separating the separator from the pouch to measure a shrinkage rate in the MD direction and TD direction.

In the present invention, the dry shrinkage is a value obtained by storing a separator that is cut into a size of 5 cm x 5 cm in a convection oven at 150 °C for 30 minutes, and then taking the separator out to measure a shrinkage rate in the MD direction and TD direction.

**<Separator>**

First, a separator according to the present invention is described.

The separator, according to the present invention, includes a substrate layer, and a porous coating layer positioned on one side or both sides of the substrate layer, and containing a first inorganic particle, a second inorganic particle, and an acrylic-based binder.

In the present invention, the substrate layer is a thin film made of an insulating material for transmitting lithium ions only and for preventing occurrence of shorts, and may be a porous polymer film, for example, a polymer film formed of any one polymer selected from the group consisting of polyolefin such as polyethylene and polypropylene, polyester such as polyethylene terephthalate and polybutylene terephthalate, polyacetal, polyamide, polyimide, polycarbonate, polyetherether ketone, polyarylether ketone, polyetherimide, polyamideimide, polybenzimidazole, polyether sulfone, polyphenylene oxide, a cyclic olefin copolymer, polyphenylene sulfide, polyethylenenaphthalate, Teflon, and polytetrafluoroethylene, or a copolymer or a mixture of two or more thereof.

Preferably, the substrate layer may be a polyolefin-based substrate including polyolefin. The polyolefin-based substrate may have an excellent shut-down function, contributing to improvement in battery safety. The polyolefin-based substrate may be selected from, for example, a polyethylene single-layer film, a polypropylene single-layer film, a polyethylene/polypropylene double-layer film, a polypropylene/polyethylene/polypropylene three-layer film, and a polyethylene/polypropylene/polyethylene three-layer film. In addition, the polyolefin-based resin may include a non-olefin resin or a copolymer of olefin and non-olefin monomers in addition to the olefin resin.

The substrate layer may have a thickness of about 1 $\mu$m to 20 $\mu$m, preferably of 1 $\mu$m to 15 $\mu$m, and more preferably of 1 $\mu$m to 10 $\mu$m. When the thickness of the substrate layer falls within the above range, it is preferable in that permeability is good, mechanical tensile strength capable of meandering may be achieved in a cell assembly process, high puncture resistance, with which the substrate layer withstands the penetration of lithium precipitation in a form of dendrites generated on a surface of a negative electrode in case of overcharging, may be achieved, and it is advantageous in increasing the output and capacity of a battery.

The porous coating layer is positioned on one side or both sides of the substrate layer for improving mechanical strength and heat resistance of the substrate layer, and the porous coating layer according to the present invention includes a first inorganic particle and a second inorganic particle having different average particle diameters ($D_{50}$), and an acrylic-based binder.

When the two types of inorganic particles having different average particle diameters ($D_{50}$) are included in the porous coating layer, particles with a small average particle diameter ($D_{50}$) may be disposed between particles with a large average particle diameter ($D_{50}$), and accordingly, the proportion of pores present between the inorganic particles may decrease, and thus there may be effects of increasing the packing density of the porous coating layer and increasing thermal stability. However, even though the two types of inorganic particles having different average particle diameters ($D_{50}$) are used, if the difference between the average particle diameters ($D_{50}$) of the inorganic particles is too large, the pore size or porosity in the porous coating layer may become too small, so that electrolyte impregnation may be reduced, thereby reducing electrochemical property, and if the difference between the average particle diameters ($D_{50}$) of the inorganic particles is too small, improvement effect in thermal stability is insignificant.

Therefore, in the present invention, by adjusting the ratio of the average particle diameters ($D_{50}$) of the first inorganic particle and the second inorganic particle to fall within a particular range, the reduction in electrochemical property may be minimized and heat shrinkage of the separator may be reduced.

In particular, in the present invention, the ratio of the average particle diameter ($D_{50}$) of the second inorganic particle to the average particle diameter ($D_{50}$) of the first inorganic particle may be 1.4 to 2.0, preferably 1.4 to 1.8, and more preferably 1.4 to 1.5.

When the ratio of the average particle diameter ($D_{50}$) of the second inorganic particle to the average particle diameter ($D_{50}$) of the first inorganic particle is greater than 2.0, due to excessively large pores, wet shrinkage and dry shrinkage become high, so that there is a problem that the probability of an internal short circuit occurring in the battery increases, and when the ratio of the average particle diameter ($D_{50}$) of the second inorganic particle to the average particle diameter ($D_{50}$) of the first inorganic particle is less than 1.4, there is a problem that dispersibility of inorganic particles is reduced, or particles are distributed in the already formed pores to decrease the permeability.

In comparison, when the ratio of the average particle diameters ($D_{50}$) of the first inorganic particle and the second inorganic particle falls within the range of the present invention, the first inorganic particles with a small particle diameter may be included between the second inorganic particles with a large particle diameter, and accordingly, the proportion of pores present between the inorganic particles decreases. Accordingly, the packing density of the porous coating layer may increase, and less shrinkage due to heat may occur when left at room temperature and high temperature, resulting in the increase in high-temperature stability of a battery. That is, when the ratio of the average particle diameter ($D_{50}$) of the second inorganic particle to the average particle diameter ($D_{50}$) of the first inorganic particle is 1.4 to 2.0, preferably 1.4 to 1.8, and more preferably 1.4 to 1.5, not only substrate binding power but also heat resistance and moisture resistance of the separator may be improved, and accordingly, safety and lifetime characteristics of the battery may be improved.

In the present invention, the average particle diameter ($D_{50}$) of the first inorganic particle may be 0.32 μm to 0.5 μm, preferably 0.32 μm to 0.45 μm, and more preferably 0.32 μm to 0.4 μm. When the average particle diameter ($D_{50}$) of the first inorganic particle is less than 0.32 μm, a porous shape is difficult to be formed in the coating layer, leading to a problem of decrease in ionic conductivity, relatively increased surface area increases the contact area with a binder, causing a problem of excessive consumption of the binder to make the coating layer thicker, and a phenomenon of aggregation between the first inorganic particles causes a problem of decrease in dispersibility. In addition, when the average particle diameter ($D_{50}$) of the first inorganic particle is greater than 0.5 μm, non-uniform pores are formed during a process of forming the porous structure, causing a problem of an electrolyte solution not uniformly distributed. When the average particle diameter ($D_{50}$) of the first inorganic particle falls within the above range, the value satisfies the optimal size ratio, in terms of the packing density with the second inorganic particle, thereby exhibiting improvement effect in thermal stability.

In addition, the average particle diameter ($D_{50}$) of the second inorganic particle may be 0.45 μm to 0.70 μm, preferably 0.45 μm to 0.60 μm, and more preferably 0.48 μm to 0.55 μm. If the average particle diameter ($D_{50}$) of the second inorganic particle is less than 0.45 μm, cohesion between the particles may become strong, causing a problem of lack of uniformity in the particle distribution in the porous coating layer, and when the electrolyte solution penetrates into the porous coating layer, the degree to which the porous coating layer expands is not uniform, causing a problem of crack occurring. If the average particle diameter ($D_{50}$) of the second inorganic particle is greater than 0.70 μm, it refers to an excessively large particle size, and in this case, when the electrolyte solution penetrates into the porous coating layer, distribution is not uniform inside and local aggregation occurs, causing a problem of increase in expansion rate in a particular region and increase in wet shrinkage, and since the large particles have difficulty in maintaining sufficient moisture, the porous coating layer rapidly shrinks in case of moisture loss, causing a problem of increasing the crack.

When the average particle diameter ($D_{50}$) of the second inorganic particle falls within the above range, a BET specific surface area becomes small, which may be advantageous in terms of moisture absorption and interface resistance.

Meanwhile, in the present invention, the first inorganic particle with a small particle diameter is included in the porous coating layer in a larger amount than that of the second inorganic particle with a large particle diameter. That is, the amount of the first inorganic particle in the coating layer is larger than the amount of the second inorganic particle. When the amount of the second inorganic particle is larger than the amount of the first inorganic particle, due to reduction in substrate binding power, increases in wet shrinkage and dry shrinkage are observed.

Preferably, the porous coating layer may include the first inorganic particle and the second inorganic particle in a weight ratio of 55:45 to 95:5, more preferably 60:40 to 85:15, and even more preferably 65:35 to 75:25. When the weight ratio of the first inorganic particle and the second inorganic particle falls within the above ranges, the packing density of the porous coating layer increases, so that the improvement effect of thermal safety is more excellent.

The first inorganic particle and the second inorganic particle may each independently include one or more selected from the group consisting of aluminum oxide ($Al_2O_3$), boehmite ($AlOOH$), silicon dioxide ($SiO_2$), magnesium oxide ($MgO$), titanium oxide ($TiO_2$), and zeolite, and may each preferably include aluminum oxide ($Al_2O_3$). The above inorganic particles may prevent a separator from shrinking at high temperature by improving thermal stability of the separator. In particular, in case of including aluminum oxide ($Al_2O_3$), due to the high thermal stability, the particle may have a particle shape and size distribution favorable for maintaining the shape and characteristics at high temperature, and for maintaining the porous structure, and due to affinity with moisture, the particle may be well bound to an electrolyte solution to have the effect of uniform dispersion in the coating layer, thereby eventually improving the wet shrinkage and dry shrinkage of the separator. On the contrary, when the first inorganic particle or the second inorganic particle includes an inorganic material such as aluminum hydroxide ($Al(OH)_3$) or magnesium hydroxide ($Mg(OH)_2$), thermal decomposition or dehydration reaction occurs easily at high temperature, so that physical property may be changed, causing deformation of the porous coating layer, and when including barium sulfate ($BaSO_4$), the hydrophobic nature causes a problem in uniform dispersion of the inorganic particles in the porous coating layer, and a problem of decreasing compatibility with a binder.

Meanwhile, the acrylic-based binder serves to provide adhesive force for the porous coating layer to be well bonded to the substrate layer, and to improve heat resistance, permeability, and oxidation resistance of the separator.

As the acrylic-based binder, acrylic-based binders used in the relevant art may be used, and for example, PAA, a PAA-PAM copolymer, a PAA-PU copolymer, etc. may be used, but an example is not limited thereto.

Meanwhile, the acrylic-based binder may be included in an amount of 1 wt% to 6 wt%, preferably 1 wt% to 4 wt%, and more preferably 1 wt% to 2 wt% on the basis of the total weight of the porous coating layer. When the amount falls within the above ranges, the wet shrinkage, peel strength, mechanical tensile/puncture resistance of the separator may be maintained high, and the resistance may be lowered and the output and capacity may be increased.

Meanwhile, the porous coating layer of the present invention, as above, functions to decrease surface resistance and to have conductivity for insulating a negative electrode and positive electrode, and at the same time, serves to improve ion movement of lithium ions and decrease the wet shrinkage and dry shrinkage of the separator.

The porous coating layer may be positioned on one side or both sides of the substrate layer, and may have a thickness of 1.2 $\mu$m to 2.0 $\mu$m, preferably of 1.4 $\mu$m to 1.9 $\mu$m, and more preferably of 1.6 $\mu$m to 1.8 $\mu$m. When the thickness of the porous coating layer is less than 1.2 $\mu$m, due to the small thickness, it is difficult to maintain stability in a high-temperature environment, and since insulation function is not exhibited, effect of improving conductivity may not be achieved, and when the thickness is larger than 2.0 $\mu$m, due to the excessively large thickness, penetration of an electrolyte solution becomes difficult, and non-uniform expansion and shrinkage occur inside and on a surface of the porous coating layer when the porous coating layer is in contact with the electrolyte solution, causing a problem of crack occurring in the porous coating layer, and the movement distance of lithium ions increases, causing a problem of reduction in performance of a battery. When the thickness of the porous coating layer falls within the above range, the battery performance may be improved by decreased internal resistance, improved rate performance, decreased movement distance of lithium ions, etc.

The porous coating layer may have a porosity of 60% or less, preferably of 52% to 60%, and more preferably of 54% to 57%. When the porosity is greater than 60%, due to weakened adhesive force between the inorganic materials caused by decrease in effective cohesive bonding area, mechanical property of the separator may be reduced, resulting in a risk of deteriorating impregnation of electrolyte solution and deteriorating high efficiency charging and discharging characteristics.

The porous coating layer may have a loading amount of 4.9 g/cm$^2$ to 7.0 g/cm$^2$, preferably 5.6 g/cm$^2$ to 6.7 g/cm$^2$, and more preferably 6.0 g/cm$^2$ to 6.3 g/cm$^2$. When the loading amount falls within the above ranges, thermal shrinkage may be prevented in a high-temperature electrolyte solution condition, and also the resistance may be reduced.

The porous coating layer may have a packing density of 1.4 g/cm$^3$ to 2.0 g/cm$^3$, preferably 1.6 g/cm$^3$ to 1.9 g/cm$^3$, and more preferably 1.7 g/cm$^3$ to 1.8 g/cm$^3$. When the packing density falls within the above ranges, thermal shrinkage may be prevented in a high-temperature electrolyte solution condition, and also the resistance may be reduced.

Meanwhile, the porous coating layer may be formed by applying a slurry composition onto one side or both sides of the substrate layer.

At this time, the slurry composition may be prepared by adding the first inorganic particle, the second inorganic particle, and the acrylic-based binder to a solvent. At this time, as the solvent, water, an organic solvent, or a mixture thereof may be used, and preferably, water may be used. In case of using water as a solvent, due to effects of high dielectric constant, polarity, hydrogen bond, high reaction rate may be obtained.

Meanwhile, the slurry composition may include a solid content in an amount of 20 wt% to 50 wt%, preferably 30 wt% to 40 wt%, and more preferably 33 wt% to 37 wt%. When the amount of the solid content in the slurry composition falls within the above range, an appropriate viscosity and particle size distribution for high packing density and coating quality may be secured.

**<Lithium Secondary Battery>**

Hereinafter, a lithium secondary battery according to the present invention is described.

The secondary battery of the present invention includes a positive electrode, a negative electrode, a separator disposed between the positive electrode and the negative electrode, and an electrolyte solution, and as the separator, the separator according to the present invention, previously described, is used. Since the separator is previously described, other components will be described in the following.

(1) Positive Electrode

In particular, the positive electrode according to the present invention may include a positive electrode active material layer containing a positive electrode active material, and as needed, the positive electrode active material layer may further include a conductive material and/or a binder.

The positive electrode active material may include a lithium transition metal oxide containing at least one metal selected from cobalt, manganese, nickel, or aluminum, and lithium, as a compound capable of reversibly intercalating and deintercalating lithium, and particularly, may include at least one of a lithium manganese-based oxide, a lithium iron phosphate, or a lithium nickel manganese cobalt-based oxide (for example, $Li(Ni_pCo_qMn_{r1})O_2$ (where, $0<p<1$, $0<q<1$, $0<r1<1$, and $p+q+r1=1$)) which is high in capacity characteristics and safety of a battery.

In particular, the lithium manganese-based oxide may include $LiMnO_2$ or $LiMn_2O_4$, and the lithium iron phosphate may include $LiFePO_4$ as an example.

In addition, the lithium nickel manganese cobalt-based oxide may include at least one of $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, and among these, it may be preferable to include a lithium transition metal oxide having nickel in an amount of 60 atm% or greater in the transition metals. That is, as the amount of nickel increases in the transition metals, the higher capacity may be achieved, and therefore, using nickel in the amount of 60 atm% or greater is more advantageous in achieving high capacity. The lithium composite metal oxide may be at least one selected from the group consisting of $Li(Ni_{0.6}Mn_{0.2}Co_{0.2})O_2$, $Li(Ni_{0.7}Mn_{0.15}Co_{0.15})O_2$, and $Li(Ni_{0.8}Mn_{0.1}Co_{0.1})O_2$.

Meanwhile, in addition to the lithium transition metal oxide, the positive electrode active material of the present invention may include a lithium cobalt-based oxide (for example, $LiCoO_2$), a lithium nickel-based oxide (for example, $LiNiO_2$), a lithium nickel manganese-based oxide (for example, $LiNi_{1-Y}Mn_YO_2$ ($0<Y<1$) and $LiMn_{2-z}Ni_zO_4$ ($0<Z<2$)), a lithium nickel cobalt-based oxide (for example, $LiNi_{1-Y1}Co_{Y1}O_2$ ($0<Y1<1$)), a lithium manganese cobalt-based oxide (for example, $LiCo_{1-Y2}Mn_{Y2}O_2$ ($0<Y2<1$) and $LiMn_{2-z1}Co_{z1}O_4$ ($0<Z1<2$)), a lithium nickel manganese cobalt-based oxide (for example, $Li(Ni_{p1}Co_{q1}Mn_{r2})O_4$ ($0<p1<2$, $0<q1<2$, $0<r2<2$, and $p1+q1+r2=2$), or a lithium nickel cobalt transition metal (M) oxide (for example, $Li(Ni_{p2}Co_{q2}Mn_{r3}M_{S2})O_2$ (M is selected from the group consisting of Al, Fe, V, Cr, Ti, Ta, Mg, and Mo, and p2, q2, r3, and s2 are each independently an atomic fraction of an atom, $0<p2<1$, $0<q2<1$, $0<r3<1$, $0<s2<1$, and $p2+q2+r3+s2=1$), and any one thereof, or a compound of two or more thereof may further be included.

The positive electrode active material may be included in an amount of 90 wt% to 99 wt%, and particularly in an amount of 93 wt% to 98 wt% on the basis of the total weight of a solid content in the positive electrode active material layer.

The conductive material may not be particularly limited as long as it does not cause chemical change in the relevant battery and has conductivity, and for example, carbon powder including carbon black, acetylene black, ketjen black, channel black, furnace black, lamp black, or thermal black; graphite powder including natural graphite, artificial graphite, or graphite which has very developed crystal structure; a conductive fiber including a carbon fiber, metal fiber, or the like; conductive powder such as fluoride carbon powder, aluminum powder, or nickel powder; a conductive whisker including zinc oxide, potassium titanate, etc.; a conductive metal oxide such as titanium oxide; a conductive material such as a polyphenylene derivative, etc. may be used.

The conductive material may be added generally in an amount of 1 wt% to 30 wt% on the basis of the total weight of a solid content in the positive electrode active material layer.

The binder is a component that serves to improve binding between the positive electrode active material particles, and adhesion between the positive electrode active material and a current collector, and may be added generally in an amount of 1 wt% to 30 wt% on the basis of the total weight of the solid in the positive electrode active material layer. Examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, and a styrene-isoprene rubber; a cellulose-based binder including carboxyl methyl cellulose (CMC), starch, a hydroxy propyl cellulose, and regenerated cellulose; a polyalcohol-based binder including polyvinylalcohol; a polyolefin-based binder including polyethylene and polypropylene; a polyimide-based binder; a polyester-based binder; and a silane-based binder.

The positive electrode of the present invention may be prepared according to a preparation method for a positive electrode well known in the relevant art. For example, the positive electrode may be prepared in a method in which a positive electrode active material, a binder and/or a conductive material are dissolved or dispersed in a solvent to prepare a positive electrode slurry, and the positive electrode slurry is applied onto a positive electrode current collector, then dried and pressed to form a positive electrode active material layer, or a method in which casting of the positive electrode active material layer is performed on a separate support, and a film separated from the support is then laminated onto the positive electrode current collector.

The positive electrode current collector is not particularly limited as long as it does not cause chemical change in the relevant battery and has conductivity, and for example, stainless-steel, aluminum, nickel, titanium, calcined carbon, aluminum or stainless-steel that is surface-treated with carbon, nickel, titanium, silver, etc. may be used.

The solvent may include an organic solvent such as N-methyl-2-pyrrolidone (NMP), which may be used in an amount that allows the positive electrode active material, and selectively the binder and conductive material, and the like to be included in a desirable viscosity. For example, the solvent may be included in the amount that allows a solid content of the active material slurry, including the positive electrode active material, and selectively the binder and the conductive material, to have a concentration of 10 wt% to 70 wt%, and preferably 20 wt% to 60 wt%.

(2) Negative Electrode

Next, a negative electrode is described.

The negative electrode according to the present invention may include a negative electrode active material layer containing a negative electrode active material, and as needed, the negative electrode active material layer may further include a conductive material and/or a binder.

The negative electrode active material may include at least one selected from the group consisting of lithium metal, a carbon material capable of reversibly intercalating/deintercalating lithium ions, a metal or an alloy of the metal and lithium, a metal composite oxide, a material capable of doping and dedoping lithium, and a transition metal oxide.

As the carbon material capable of reversibly intercalating/deintercalating lithium ions, any carbon-based negative electrode active material that is generally used in a lithium-ion secondary battery may be used without particular limitation, and representative examples thereof may include crystalline carbon, amorphous carbon, or a combination thereof. Examples of the crystalline carbon may include graphite such as non-shaped, sheet-shaped, flake-shaped, sphere-shaped, or fiber-shaped natural graphite or artificial graphite, and examples of the amorphous carbon may include soft carbon (low-temperature calcined carbon) or hard carbon, a mesophase pitch carbonization product, calcined cokes, etc.

The metal or the alloy of the metal and lithium may include a metal selected from the group consisting of Cu, Ni, Na, K, Rb, Cs, Fr, Be, Mg, Ca, Sr, Si, Sb, Pb, In, Zn, Ba, Ra, Ge, Al, and Sn, or an alloy of the metal and lithium.

The metal composite oxide may be selected from the group consisting of $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, $Bi_2O_5$, $Li_xFe_2O_3(0 \leq x \leq 1)$, $Li_xWO_2(0 \leq x \leq 1)$, and $Sn_xMe_{1-x}Me'_yO_z$ (Me: Mn, Fe, Pb, Ge; Me': Al, B, P, Si, a Group 1 element, a Group 2 element, and a Group 3 element of the periodic table, halogen; $0<x \leq 1$; $1 \leq y \leq 3$; $1 \leq z \leq 8$).

The material capable of doping and dedoping lithium may include Si, $SiO_x(0<x<2)$, a Si-Y alloy (Y above is an element selected from the group consisting of alkali metal, alkali earth metal, a Group 13 element, a Group 14 element, a transition metal, a rare-earth element, and a combination thereof, and not Si), Sn, $SnO_2$, Sn-Y (Y above is an element selected from the group consisting of alkali metal, alkali earth metal, a Group 13 element, a Group 14 element, a transition metal, a rare-earth element, and a combination thereof, and not Sn), etc., and a mixture of at least one thereof and $SiO_2$ may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include a lithium-containing titanium composite oxide (LTO), a vanadium oxide, a lithium vanadium oxide, etc.

The negative electrode active material may be included in an amount of 80 wt% to 99 wt% on the basis of the total weight of a solid content in the negative electrode active material layer.

The conductive material is a component that further improves conductivity of the negative electrode active material, and may be included in an amount of 1 to 20 wt% on the basis of the total weight of the solid content in the negative electrode active material layer. The conductive material may not be particularly limited as long as it does not cause chemical change in the relevant battery and has conductivity, and for example, graphite such as natural graphite or artificial graphite; carbon black including acetylene black, ketjen black, channel black, furnace black, lamp black, thermal black, etc.; a conductive fiber including a carbon fiber, a metal fiber, or the like; conductive powder including fluoride carbon powder, aluminum power, or nickel powder; a conductive whisker including zinc oxide, potassium titanate, etc.; a conductive metal oxide such as titanium oxide; a conductive material such as a polyphenylene derivative, etc. may be used.

The binder is a component that assists binding between the conductive material, the active material, and the current collector, and is included generally in an amount of 1 to 30 wt% on the basis of the total weight of the solid content in the negative electrode active material layer. Examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, and a styrene-isoprene rubber; a cellulose-based binder including carboxyl methyl cellulose (CMC), starch, hydroxy propyl cellulose, and regenerated cellulose; a polyalcohol-based binder including polyvinyl alcohol; a polyolefin-based binder including polyethylene, and polypropylene; a polyimide-based binder; a polyester-based binder; and a silane-based binder.

The negative electrode may be prepared according to a preparation method for a negative electrode well known in the relevant art. For example, the negative electrode may be prepared in a method in which the negative electrode active material, and selectively, the binder and the conductive material are dissolved or dispersed in a solvent to prepare a negative electrode slurry, and the negative electrode slurry is applied onto the negative electrode current collector, and pressed and dried to prepare the negative electrode active material layer, or a method in which casting of the negative electrode active material layer is performed on a separate support, and a film separated from the support is then laminated onto the negative electrode current collector.

The negative electrode current collector may generally have a thickness of 3 to 500 $\mu$m. The negative electrode current collector is not particularly limited as long as it does not cause chemical change in the relevant battery and has high conductivity, and for example, copper, stainless steel, aluminum, nickel, titanium, calcined carbon, copper or stainless steel that is surface-treated with carbon, nickel, titanium, silver, etc., an aluminum-cadmium alloy, etc. may be used. In addition, the negative electrode current collector, like the positive electrode current collector, may also have microscopic irregularities on a surface to strengthen binding power of the negative electrode active material, and may be used in various forms such as a film, a sheet, a foil, a net, a porous body, a foam body, or a non-woven fabric.

The solvent may include an organic solvent such as water, NMP, or alcohol, which may be used in an amount that allows the negative electrode active material, and selectively the binder and conductive material, and the like to be included in a desirable viscosity. For example, the solvent may be included in the amount that allows a solid content of the active material slurry, including the negative electrode active material, and selectively the binder and the conductive material, to have a concentration of 50 wt% to 75 wt%, and preferably 50 wt% to 65 wt%.

(3) Electrolyte

Next, an electrolyte is described.

The electrolyte may include an organic solvent and a lithium salt.

Any organic solvent may be used as the organic solvent, without particular limitation, as long as it may function as a medium through which ions involved in an electrochemical reaction of the battery may move. In particular, as the organic solvent, an ester-based solvent including methyl acetate, ethyl acetate, $\gamma$-butyrolactone, $\varepsilon$-caprolactone, etc.; an ether-based solvent including dibutyl ether, tetrahydrofuran, etc.; a ketone-based solvent including cyclohexanone, etc.; an aromatic hydrocarbon-based solvent including benzene, fluorobenzene, etc.; a carbonate-based solvent including dimethylcarbonate (DMC), diethylcarbonate (DEC), methylethylcarbonate (MEC), ethylmethylcarbonate (EMC), ethylene carbonate (EC), propylene carbonate (PC), etc.; an alcohol-based solvent including ethylalcohol, isopropyl alcohol, etc.; nitriles including R-CN (where R is a linear, branched, or cyclic C2 to C20 hydrocarbon group, and may include a double-bond aromatic ring or an ether bond), etc.; amides including dimethylformamide, etc.; dioxolanes including 1,3-dioxolane, etc.; or sulfolanes may be used. Among these, a carbonate-based solvent is preferred, and a mixture of a cyclic carbonate (for example, ethylene carbonate, propylene carbonate, or the like) having high ionic conductivity and high permittivity capable of increasing charging and discharging performance of a battery, and a low-viscosity linear carbonate-based compound (for example, ethylmethyl carbonate, dimethyl carbonate, diethyl carbonate, or the like) is more preferred.

Any compound capable of providing lithium ions that are used in a lithium secondary battery may be used for the lithium salt without particular limitation. In particular, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, $LiB(C_2O_4)_2$, or the like may be used. The lithium salt may be used in a concentration range of 0.1 to 5.0 M, and preferably of 0.1 to 3,0 M. When the concentration of lithium salt falls within the above ranges, the electrolyte may have appropriate conductivity and viscosity, and therefore, excellent performance of the electrolyte may be exhibited, and lithium ions may move effectively.

In addition to the above electrolyte components, an additive may further be included in the electrolyte for the purpose of improving lifetime characteristics of a battery, suppressing reduction in battery capacity, improving a discharge capacity of the battery, etc. For example, as the additive, a halo-alkylene carbonate-based compound such as difluoro ethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, or the like may be used alone, or as a mixture thereof, but an example is not limited thereto. The additive may be included in the amount of 0.1 to 10 wt%, and preferably 0.1 to 5 wt% on the basis of the total weight of the electrolyte.

Hereinafter, the present invention will be described in more detail through examples. However, the following examples are only intended to exemplify the present invention, and the scope of the present invention is not limited thereto.

**Example and Comparative Example**

**Example 1**

30 g of inorganic particles, in which a first inorganic particle ($Al_2O_3$) having an average particle diameter ($D_{50}$) of 0.35 $\mu$m and a second inorganic particle ($Al_2O_3$) having an average particle diameter of 0.5 $\mu$m were mixed in a weight ratio of 7:3, and 1.9 g of an acrylic-based binder were added to water that is a solvent, and agitated to prepare a slurry composition having a solid content of 35 wt%.

The slurry composition was applied onto both sides of a polyethylene substrate in a thickness of 1.7 $\mu$m. At this time, the porous coating layer had a porosity of 53%.

**Comparative Example 1**

A separator was prepared in the same method as that of Example 1 above, except that only the first inorganic particle having an average particle diameter ($D_{50}$) of 0.35 $\mu$m was added.

**Comparative Example 2**

A separator was prepared in the same method as that of Example 1 above, except that the first inorganic particle having an average particle diameter ($D_{50}$) of 0.35 $\mu$m and the second inorganic particle having an average particle diameter ($D_{50}$) of 0.5 $\mu$m were mixed in a weight ratio of 5:5.

**Comparative Example 3**

A separator was prepared in the same method as that of Example 1 above, except that the first inorganic particle having an average particle diameter ($D_{50}$) of 0.35 $\mu$m and the second inorganic particle having an average particle diameter ($D_{50}$) of 0.5 $\mu$m were mixed in a weight ratio of 3:7.

**Comparative Example 4**

A separator was prepared in the same method as that of Example 1 above, except that only the second inorganic particle having an average particle diameter ($D_{50}$) of 0.5 $\mu$m was added.

**Comparative Example 5**

A separator was prepared in the same method as that of Example 1 above, except that the first inorganic particle having an average particle diameter ($D_{50}$) of 0.1 $\mu$m and the second inorganic particle having an average particle diameter ($D_{50}$) of 0.5 $\mu$m were mixed in a weight ratio of 7:3.

**Comparative Example 6**

A separator was prepared in the same method as that of Example 1 above, except that the first inorganic particle having an average particle diameter ($D_{50}$) of 0.1 $\mu$m and the second inorganic particle having an average particle diameter ($D_{50}$) of 0.8 $\mu$m were mixed in a weight ratio of 7:3.

The average particle diameter ($D_{50}$) of each of the first inorganic particles and the second inorganic particles, the average particle diameter ($D_{50}$) ratios and the weight ratios of the first inorganic particles and the second inorganic particles, used in the preparation of the separators according to Example 1 and Comparative Examples 1 to 6, were listed in Table 1 below.

[Table 1]

| | Average particle diameter ($D_{50}$)[μm] | | Ratio of average particle diameter ($D_{50}$) | Weight ratio |
|---|---|---|---|---|
| | Average particle diameter ($D_{50}$)[μm] of first inorganic particle | Average particle diameter ($D_{50}$)[μm] of second inorganic particle | | |
| Example 1 | 0.35 | 0.5 | 1.42 | 7:3 |
| Comparative Example 1 | 0.35 | - | - | 10:0 |
| Comparative Example 2 | 0.35 | 0.5 | 1.42 | 5:5 |
| Comparative Example 3 | 0.35 | 0.5 | 1.42 | 3:7 |
| Comparative Example 4 | - | 0.5 | - | 0:10 |
| Comparative Example 5 | 0.1 | 0.5 | 5 | 7:3 |
| Comparative Example 6 | 0.1 | 0.8 | 8 | 7:3 |

**Experimental Example 1: Measurement of Wet Shrinkage**

The wet shrinkage of each of the separators, prepared according to Example 1 and Comparative Examples 1 to 6, was measured in the following method.

Each separator was cut into a size of 5 cm x 5 cm, and placed in a pouch of 10 cm x 9 cm together with 1 g of a $LiPF_6$ electrolyte and impregnated therein, and then stored in a convection oven at 130 °C for 30 minutes. After this, the separator was separated from the pouch, and then the shrinkage rates in a MD direction and TD direction were measured. The measurement results were listed in Table 2 below.

**Experimental Example 2: Measurement of Dry Shrinkage**

Each of the separators, prepared according to Example 1 and Comparative Examples 1 to 6, was cut into a size of 5 cm x 5 cm, and stored in a convection oven at 150 °C for 30 minutes, and then taken out to measure the shrinkage rates in a MD direction and TD direction. The measurement results were listed in Table 2 below.

**Experimental Example 3: Measurement of Loading Amount**

The weight of each of a coating separator and a base film, cut into a size of 5 cm x 5 cm, was measured 6 times, and the difference between the average weight values of the coating separator and the base film was calculated to measure the loading amount of the porous coating layer included in each of the separators prepared according to Example 1 and Comparative Examples 1 to 6. The calculation results were listed in Table 2 below.

**Experimental Example 4: Calculation of packing density**

The loading amount of the porous coating layer, calculated according to Experimental Example 3, was divided by 3.4 μm which is the difference between 13 μm the total thickness of the separator and 9.6 μm the thickness of the substrate layer of the separator to measure the packing density of the porous coating layer included in each of the separators prepared according to Example 1 and Comparative Examples 1 to 6. The calculation results were listed in Table 2 below.

[Table 2]

| | Wet shrinkage [%] | | Dry shrinkage [%] | | Loading amount [g/cm$^2$] | Packing density [g/cm$^3$] |
|---|---|---|---|---|---|---|
| | MD [%] | TD [%] | MD [%] | TD [%] | | |
| Example 1 | 2 | 1 | 2 | 3 | 6.3 | 1.85 |

(continued)

| | Wet shrinkage [%] | | Dry shrinkage [%] | | Loading amount $[g/cm^2]$ | Packing density $[g/cm^3]$ |
|---|---|---|---|---|---|---|
| | MD [%] | TD [%] | MD [%] | TD [%] | | |
| Comparative Example 1 | 11 | 8 | 69 | 68 | 5.0 | 1.47 |
| Comparative Example 2 | 8 | 6 | 49 | 42 | 5.8 | 1.71 |
| Comparative Example 3 | 9 | 7 | 51 | 45 | 5.7 | 1.68 |
| Comparative Example 4 | 11 | 10 | 56 | 49 | 5.4 | 1.59 |
| Comparative Example 5 | 11 | 9 | 67 | 65 | 5.5 | 1.62 |
| Comparative Example 6 | 12 | 10 | 73 | 71 | 5.0 | 1.47 |

Referring to Table 2, it can be seen that the separator according to Example 1 had significantly improved wet shrinkage and dry shrinkage, compared to the separators according to Comparative Examples 1 to 6. Accordingly, when applied to an actual cell, the separator can be expected to have significantly different heat resistance.

## Claims

1.  A separator comprising:

    a substrate layer; and
    a porous coating layer positioned on one side or both sides of the substrate layer, and including a first inorganic particle, a second inorganic particle, and an acrylic-based binder,
    wherein a ratio of an average particle diameter ($D_{50}$) of the second inorganic particle to an average particle diameter ($D_{50}$) of the first inorganic particle is 1.4 to 2.0,
    an amount of the first inorganic particle is greater than an amount of the second inorganic particle on the basis of a total weight of the porous coating layer, and
    the porous coating layer has a thickness of 1.2 $\mu$m to 2.0 $\mu$m.

2.  The separator of claim 1, wherein the first inorganic particle has an average particle diameter ($D_{50}$) of 0.32 $\mu$m to 0.5 $\mu$m.

3.  The separator of claim 1, wherein the second inorganic particle has an average particle diameter ($D_{50}$) of 0.45 $\mu$m to 0.70 $\mu$m.

4.  The separator of claim 1, wherein the porous coating layer comprises the first inorganic particle and the second inorganic particle in a weight ratio of 55:45 to 95:5.

5.  The separator of claim 1, wherein each of the first inorganic particle and the second inorganic particle independently comprises one or more selected from the group consisting of aluminum oxide ($Al_2O_3$), boehmite (AlOOH), silicon dioxide ($SiO_2$), magnesium oxide (MgO), titanium oxide ($TiO_2$), and zeolite.

6.  The separator of claim 1, wherein the porous coating layer has a porosity of 60% or less.

7.  The separator of claim 1, wherein the porous coating layer has a loading amount of 4.9 $g/cm^2$ to 7.0 $g/cm^2$.

8.  The separator of claim 1, wherein the porous coating layer has a packing density of 1.4 $g/cm^3$ to 2.0 $g/cm^3$.

9.  The separator of claim 1, wherein the porous coating layer is formed by applying a slurry composition, having a solid content of 20 wt% to 50 wt%, onto one side or both sides of the substrate layer.

10. The separator of claim 1, wherein the separator has a thickness of 11 $\mu$m to 14 $\mu$m.

11. The separator of claim 1, wherein, the separator has an MD shrinkage of 0.5% to 7.0%, and a TD shrinkage of 0.5% to 5.5% when the separator is impregnated in an electrolyte solution and then left at 130 °C for 30 minutes.

12. The separator of claim 1, wherein, the separator has an MD shrinkage of 1% to 50%, and a TD shrinkage of 2% to 40% when the separator is left at 150 °C for 30 minutes.

13. A lithium secondary battery comprising the separator of claim 1.

## INTERNATIONAL SEARCH REPORT

| International application No. |
| --- |
| **PCT/KR2024/018394** |

| | |
| --- | --- |
| **A.** | **CLASSIFICATION OF SUBJECT MATTER** |

**H01M 50/431**(2021.01)i; **H01M 50/451**(2021.01)i; **H01M 50/446**(2021.01)i; **H01M 50/443**(2021.01)i; **H01M 50/491**(2021.01)i; **H01M 50/489**(2021.01)i; **H01M 10/052**(2010.01)i

According to International Patent Classification (IPC) or to both national classification and IPC

| | |
| --- | --- |
| **B.** | **FIELDS SEARCHED** |

Minimum documentation searched (classification system followed by classification symbols)

H01M 50/431(2021.01); H01M 10/0525(2010.01); H01M 50/403(2021.01); H01M 50/409(2021.01); H01M 50/446(2021.01); H01M 50/449(2021.01); H01M 50/451(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 분리막(separator), 다공질 코팅층 (porous coating layer), 무기물 입자(inorganic particle), 평균 입경(average particle diameter)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | KR 10-2022-0137342 A (SK INNOVATION CO., LTD. et al.) 12 October 2022 (2022-10-12) See paragraphs [0057], [0082] and [0135] and claims 1-11. | 1-5,8,10-13 |
| Y | | 6-7,9 |
| Y | KR 10-2023-0067401 A (LG CHEM, LTD.) 16 May 2023 (2023-05-16) See paragraphs [0131] and [0215] and claim 11. | 6-7,9 |
| A | KR 10-2312278 B1 (SAMSUNG SDI CO., LTD.) 12 October 2021 (2021-10-12) See paragraphs [0010]-[0174] and figures 1-2. | 1-13 |
| A | KR 10-2022-0052851 A (LG ENERGY SOLUTION, LTD.) 28 April 2022 (2022-04-28) See claims 1-17 and figure 1. | 1-13 |
| A | KR 10-2014-0073957 A (LG CHEM, LTD.) 17 June 2014 (2014-06-17) See claims 1-20 and figure 1. | 1-13 |

| | |
| --- | --- |
| ☐ Further documents are listed in the continuation of Box C. | ☑ See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 February 2025** | **25 February 2025** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/018394**

| Patent document cited in search report | | | Publication date (day/month/year) | Patent family member(s) | | | Publication date (day/month/year) |
|---|---|---|---|---|---|---|---|
| KR | 10-2022-0137342 | A | 12 October 2022 | CN | 115207570 | A | 18 October 2022 |
| | | | | EP | 4071916 | A1 | 12 October 2022 |
| | | | | US | 2022-0328932 | A1 | 13 October 2022 |
| KR | 10-2023-0067401 | A | 16 May 2023 | | None | | |
| KR | 10-2312278 | B1 | 12 October 2021 | CN | 113169417 | A | 23 July 2021 |
| | | | | CN | 113169417 | B | 10 October 2023 |
| | | | | EP | 3902027 | A1 | 27 October 2021 |
| | | | | EP | 3902027 | A4 | 31 August 2022 |
| | | | | KR | 10-2020-0078011 | A | 01 July 2020 |
| | | | | US | 2022-0037741 | A1 | 03 February 2022 |
| | | | | WO | 2020-130270 | A1 | 25 June 2020 |
| KR | 10-2022-0052851 | A | 28 April 2022 | CN | 116325331 | A | 23 June 2023 |
| | | | | EP | 4170807 | A1 | 26 April 2023 |
| | | | | EP | 4170807 | A4 | 01 January 2025 |
| | | | | US | 2023-0178853 | A1 | 08 June 2023 |
| | | | | WO | 2022-086246 | A1 | 28 April 2022 |
| KR | 10-2014-0073957 | A | 17 June 2014 | KR | 10-1745631 | B1 | 09 June 2017 |

Form PCT/ISA/210 (patent family annex) (July 2022)

**EP 4 765 432 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230166120
- KR 1020240164623